**Europäisches Patentamt**

**European Patent Office**

**Office européen des brevets**

(19)

(11) Veröffentlichungsnummer: **0 049 805**
**B1**

(12) # EUROPÄISCHE PATENTSCHRIFT

(45) Veröffentlichungstag der Patentschrift:
11.07.84

(51) Int. Cl.³: **F 16 D 47/02**

(21) Anmeldenummer: **81107721.3**

(22) Anmeldetag: **29.09.81**

(54) Schwungradlagerung für Brennkraftmaschinen.

(30) Priorität: **15.10.80 DE 3038847**

(43) Veröffentlichungstag der Anmeldung:
**21.04.82 Patentblatt 82/16**

(45) Bekanntmachung des Hinweises auf die Patenterteilung:
**11.07.84 Patentblatt 84/28**

(84) Benannte Vertragsstaaten:
**DE FR GB IT**

(56) Entgegenhaltungen:
**DE - A - 2 203 425**
**DE - B - 2 640 159**
**DE - C - 536 501**
**FR - A - 920 355**
**GB - A - 736 471**
**GB - A - 1 066 239**

(73) Patentinhaber: **BAYERISCHE MOTOREN WERKE Aktiengesellschaft, Postfach 40 02 40 Petuelring 130, D-8000 München 40 (DE)**

(72) Erfinder: **Paletschek, Manfred, Ing.-grad., Wolframstrasse 11, D-8011 Pliening (DE)**

(74) Vertreter: **Schweiger, Erwin, Bayerische Motoren Werke Aktiengesellschaft Postfach 40 02 40 Petuelring 130 - AJ-20, D-8000 München 40 (DE)**

## Beschreibung

Die Erfindung bezieht sich auf eine Schwungradlagerung der Bauart nach dem Oberbegriff des Anspruches 1.

Bei der bekannten Lagerung dieser Bauart nach der GB-A-736471 besteht das Schwungrad aus zwei miteinander durch eine einvulkanisierte Elastomer-Kupplung doch- und biegeelastische – jedoch auf Grund der baulichen Ausbildung relativ Starr – verbundenen Hälften, von denen die eine starr mit dem Abtriebsende der Kurbelwelle und die andere starr mit der Trennkupplung verschraubt sind. Die dadurch gebildete Baueinheit ist ausschliesslich über die Lagerung der Kurbelwelle fliegend gelagert. Bei dieser Lagerung verursachen die von den Gas- und Massenkräften erregten Wechseldrehmomente n-ter Ordnung Taumelschwingungen des Schwungrades und damit Biegeschwingungen der Kurbelwelle n +/− 1. Ordnung. Diese Schwingungen sind für die Biegeeigenfrequenzen von Kurbelwelle und Kurbelgehäuse eine Erregerquelle, die im Fall des Zusammentreffens von Erregerfrequenz und Eigenfrequenz zu schädlichen Resonanzen führen.

Der Erfindung liegt die Aufgabe zugrunde, eine Schwungradlagerung der im Oberbegriff des Anspruches 1 beschriebenen Bauart zu schaffen, bei der Taumelschwingungen des Schwungrades und sich daraus ergebende Resonanzschwingungen unterbunden sind.

Diese Aufgabe löst die Erfindung durch die kennzeichnenden Merkmale des Anspruches 1.

Durch die zweiseitige Lagerung des Schwungrades und dessen elastische Antriebsverbindung mit der Kurbelwelle können keine Taumelschwingungen des Schwungrades mehr auftreten und werden Resonanzschwingungen von Kurbelgehäuse und/oder Kurbelwelle vermieden.

Ausführungsformen und Weiterbildungen der Erfindung sind in den Ansprüchen 2 bis 6 gekennzeichnet. Eine nicht nur biege- sondern auch torsionselastische Ausbildung der Antriebsverbindung zwischen Kurbelwelle und Schwungrad führt zu einer Erhöhung der Kurbelwellen-Dreheigenfrequenzen, so dass ggf. ein Drehschwingungsdämpfer am vorderen Kurbelwellenende entfallen kann, sowie zu einer Verringerung der Drehungleichförmigkeiten am Anschluss einer Getriebe-Eingangswelle und damit von Getriebegeräuschen.

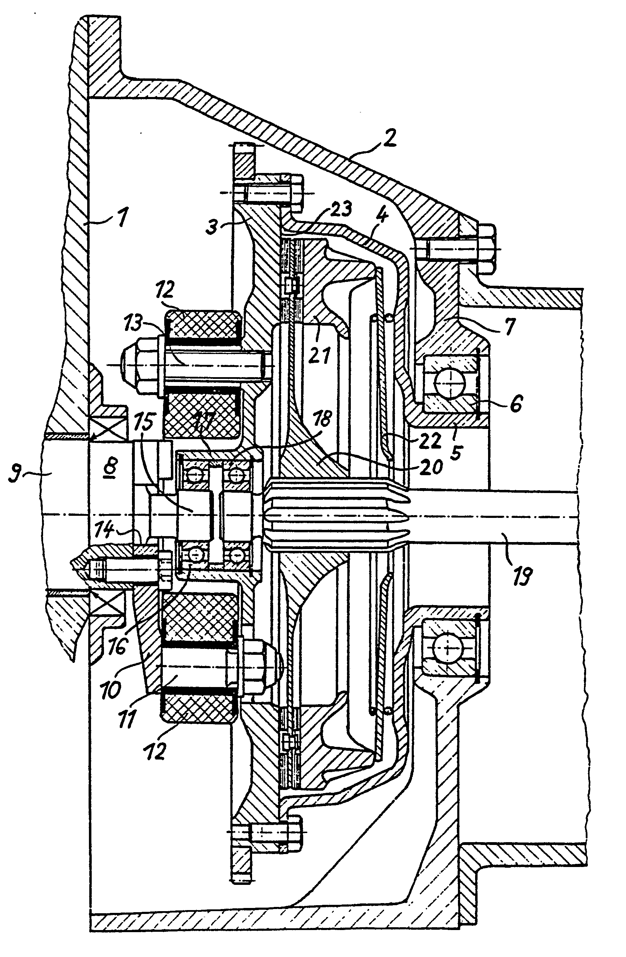

Im folgenden wird die Erfindung anhand eines in der Zeichnung dargestellten Ausführungsbeispieles erläutert. Die einzige Figur der Zeichnung zeigt einen Mittellängsschnitt einer Schwungradanordnung im Kupplungsgehäuse zwischen dem Kurbelgehäuse und dem Getriebegehäuse einer Brennkraftmaschine.

An die Stirnwand 1 des Kurbelgehäuses einer nicht dargestellten Brennkraftmaschine ist ein Kupplungsgehäuse 2 angeflanscht. Im Kupplungsgehäuse 2 ist ein Schwungrad 3 angeordnet, das mit einem Kupplungsdeckel 4 verschraubt ist. Ein Lageransatz 5 des Kupplungsdeckels 4 ist über ein Wälzlager 6 in einer Stirnwand 7 an der von der Stirnwand 1 des Kurbelgehäuses abgewandten Seite des Kupplungsgehäuses 2 gelagert.

An ein aus der Stirnwand 1 des Kurbelgehäuses ragendes Ende 8 der Kurbelwelle 9 der Brennkraftmaschine ist ein Mitnehmerstern 10 geschraubt, dessen achsparallel angeordnete Mitnehmerbolzen 11 über ein elastisches Verbindungselement in Form eines Gummielementes 12 mit entsprechenden Mitnehmerbolzen 13 des Schwungrades 3 verbunden sind.

Der Mitnehmerstern 10 weist eine konzentrische Bohrung 14 auf, durch die ein am Ende 8 der Kurbelwelle 9 ausgebildeter Lagerzapfen 15 ragt. Auf dem Lagerzapfen 15 ist ein Wälzlager 16 befestigt, auf dem eine Nabe 17 des Schwungrades 3 gelagert ist. In die Nabe 17 ist auf der dem Kupplungsdeckel 4 zugewandten Seite ein weiteres Wälzlager 18 eingepresst, in dem eine Getriebe-Eingangswelle 19 gelagert ist.

Auf der Getriebe-Eingangswelle 19 ist eine Kupplungsscheibe 20 drehfest angeordnet, die mittels einer ringförmigen Druckscheibe 21 durch eine Tellerfeder 22 an eine Gegenfläche 23 gepresst wird. Als Gegenfläche 23 dient eine der Innenseite des Kupplungsdeckels 4 zugewandte Ringfläche des Schwungrades 3.

Beider beschriebenen Schwungradlagerung ist eine elastische Kupplung bzw. Antriebsverbindung, die gummielastische Verbindungselemente verwendet am vorteilhaftesten, da sie nicht nur biege- und torsionselastisch ist, sondern ausserdem auch dämpfende Eigenschaften aufweist.

Eine alternativ mögliche Vereinigung von Mitnehmerstern, gummielastischem Verbindungselement und Schwungrad zu einem einstückigen Bauteil führt ausserdem zur Verringerung des Platzbedarfes und damit zu einer Verkürzung des Kupplungsgehäuses.

## Patentansprüche

1. Lagerung eines Schwungrades für die Kurbelwelle von Brennkraftmaschinen,
   – wobei das Schwungrad (3) und eine Trennkupplung (20 bis 23) eine Baueinheit bilden und
   – wobei zwischen Kurbelwelle (9) und Trennkupplung (20 bis 23) eine drehelastische Elastomer-Kupplung (12) angeordnet ist,
   dadurch gekennzeichnet,
   – dass die Elastomer-Kupplung (12) auch biegeelastisch ausgebildet und zwischen dem Antriebsende (8) der Kurbelwelle (9) und der starr verbundenen Baueinheit aus Schwungrad (3) und Trennkupplung (20 bis 23) angeordnet ist und
   – dass die Baueinheit mittels Dreh- und Axial-Lager (6 und 16) drehbar gelagert und gegen Taumelbewegungen festgelegt ist.

2. Lagerung nach Anspruch 1, dadurch gekennzeichnet,
   – dass je ein Lager (16 bzw. 6) am Abtriebsende (8) der Kurbelwelle (9) und im feststehenden Kupplungsgehäuse (2) angeordnet ist.

3. Lagerung nach Anspruch 2, dadurch gekennzeichnet,

— dass in einer der Kurbelwelle (9) zugewandten Nabe (17) des Schwungrades (3) zwei koaxiale Wälzlager (16 und 18) angeordnet sind,
— von denen das eine (16) auf einem am Abtriebsende (8) der Kurbelwelle (9) ausgebildeten Lagerzapfen (15) aufgezogen ist und im anderen (18) ein Ende einer Getriebe-Eingangswelle (19) gelagert ist,
— die über die Trennkupplung (20 bis 23) mit dem Schwungrad (3) antriebsverbunden ist.

4. Lagerung nach einem der Ansprüche 1 bis 3, dadurch gekennzeichnet,
— dass die Elastomerkupplung (12) an einem am Abtriebsende (8) der Kurbelwelle (9) befestigten Mitnehmerstern (10) und am Schwungrad (3) jeweils mittels Mitnehmerbolzen (11 und 13) befestigt ist.

5. Lagerung nach einem der Ansprüche 1 bis 3, dadurch gekennzeichnet,
— dass die Elastomer-Kupplung (12) mit einem am Abtriebsende (8) der Kurbelwelle (9) befestigten Mitnehmerstern (10) und mit dem Schwungrad (3) in einer Einheit zusammenvulkanisiert ist.

## Claims

1. A bearing for a flywheel for a crankshaft of an internal combustion engine,
— wherein the flywheel (3) and a clutch (20 to 23) form one component and
— wherein a rotationally resilient elastomer coupling (12) is arranged between the crankshaft (9) and the clutch (20 to 23),
characterized in
— that the elastomer coupling (12) is also bendably resilient and is arranged between the input end (8) of the crankshaft (9) and the rigidly connected component consisting of the flywheel (3) and the clutch (20 to 23), and
— that the component is rotatably mounted by means of pivots and thrust bearings (6 and 16) and is secured against wobble movements.

2. A bearing according to claim 1, characterized in
— that a bearing (16; 6) is arranged respectively at the output end (8) of the crankshaft (9) and in the stationary clutch housing (2).

3. A bearing according to claim 2, characterized in
— that two coaxial roller bearings (16 and 18) are arranged in a hub (17) of the flywheel (3) that is presented to the crankshaft (9),
— one of which roller bearings, the bearing (16), is shrunk on to a bearing pin (15) formed by the output end (8) of the crankshaft (9), and an end of a gear imput shaft (19) is mounted in the other roller bearing (18),
— which input shaft is in driving connection with the flywheel (3) by way of the clutch (20 to 23).

4. A bearing according to any one of claims 1 to 3, characterized in
— that, by means of drive pins (11 and 13 respectively), the elastomer coupling (12) is secured to a drive spider (10), attached to the output end (8) of the crankshaft (9), and to the flywheel (3).

5. A bearing according to any one of claims 1 to 3, characterized in
— that the elastomer coupling (12) is bonded by vulcanization to a drive spider (10), attached to the output end (8) of the crankshaft (9), and to the flywheel (3) to form a single unit.

## Revendications

1. Dispositif de support sur paliers d'un volant d'inertie pour l'arbre de vilebrequin de moteurs à combustion interne, dans lequel le volant (3) et un accouplement à débrayage (20 à 23) forment ensemble une unité de construction, et dans lequel un accouplement à élastomère (12) élastique à la rotation est disposé entre l'arbre de vilebrequin (9) et l'accouplement à débrayage (20-23), dispositif caractérisé en ce que l'accouplement à élastomère (12) est constitué également comme élastique à la flexion et il est disposé entre l'extrémité entraîneuse (8) de l'arbre de vilebrequin (9) et l'unité de construction à liaison rigide constituée par le volant (3) et l'accouplement à débrayage (20-23), l'unité de construction étant supportée à rotation au moyen d'un palier axial (6, 16), immobilisée à l'égard des vibrations dues aux mouvements.

2. Dispositif suivant la revendication 1, caractérisé en ce qu'un palier (16 et 6) est prévu respectivement sur l'extrémité de sortie (8) de l'arbre de vilebrequin (9) et dans le cadre d'accouplement fixe (2).

3. Dispositif suivant la revendication 2, caractérisé en ce que, dans un moyeu (17) de la roue de volant (3), tourné vers l'arbre de vilebrequin (9), sont disposés deux paliers à rouleaux coaxiaux (16 et 18), dont l'un (16) est calé sur un tourillon de support (15) formé sur l'extrémité de sortie (8) de l'arbre de vilebrequin (9), et dont l'autre (18) supporte une extrémité d'un arbre d'entrée (19) de boîte de vitesses qui est relié à entraînement avec le volant (3), par l'intermédiaire de l'accouplement débrayable (20 à 23).

4. Dispositif suivant l'une quelconque des revendications 1 à 3, caractérisé en ce que l'accouplement à élastomère (12) est fixé, d'un côté, à un organe entraîneur en étoile (10), fixé sur l'extrémité de sortie (8) de l'arbre de vilebrequin (9), et, de l'autre côté, à la roue de volant (3) au moyen d'axes d'entraînement (11 et 13).

5. Dispositif suivant l'une quelconque des revendications 1 à 3, caractérisé en ce que l'accouplement à élastomère (12) est vulcanisé en une seule unité de construction, avec une étoile entraîneuse (10) fixée sur l'extrémité de sortie (8) de l'arbre de vilebrequin (9) et avec le volant d'inertie (3).